# EUROPÄISCHE PATENTSCHRIFT

(11) **EP 4 132 837 B1**
(45) Veröffentlichungstag und Bekanntmachung des Hinweises auf die Patenterteilung: **06.08.2025**
(21) Anmeldenummer: 21717772.4
(22) Anmeldetag: 01.04.2021
(51) Int. Cl.: B62D 1/181, F16D 7/02

(54) **VERSTELLANTRIEB FÜR EINE LENKSÄULE UND LENKSÄULE FÜR EIN KRAFTFAHRZEUG**
ADJUSTMENT DRIVE FOR A STEERING COLUMN, AND STEERING COLUMN FOR A MOTOR VEHICLE
ENTRAÎNEMENT DE RÉGLAGE POUR COLONNE DE DIRECTION ET COLONNE DE DIRECTION POUR VÉHICULE AUTOMOBILE

(30) Priorität: 07.04.2020 DE 102020204473
(43) Veröffentlichungstag der Anmeldung: 15.02.2023
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SPECHT, Jean-Pierre, 9469 Haag (CH)
(74) Vertreter: thyssenkrupp Intellectual Property GmbH
(86) Internationale Anmeldenummer: PCT/EP2021/058562
(87) Internationale Veröffentlichungsnummer: WO 2021/204645

(56) Entgegenhaltungen:
- DE-A1- 102012 112 197
- DE-A1- 102014 101 995
- DE-A1- 102017 207 561

## Beschreibung

### Stand der Technik

Die Erfindung betrifft einen Verstellantrieb gemäß den Merkmalen des Oberbegriffs des Patentanspruchs 1 und eine Lenksäule mit einem solchen.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass ein Innenmantelrohr der Stelleinheit, auch kurz als Mantelrohr bezeichnet, in einer mit der Trageinheit verbundenen Manteleinheit, auch als Führungskasten, Außenmantelrohr oder Kastenschwinge bezeichnet, in Richtung der Längsachse teleskopartig verschiebbar aufgenommen ist, kann eine Längenverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längen- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen. Diese umfasst einen elektrischen Antriebsmotor, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um die Spindelachse drehend antreibbar, wodurch diese je nach Drehrichtung in Richtung der Spindelachse translatorisch aufeinander zu oder voneinander weg bewegt werden können. In einer Ausführungsform, einem sogenannten Rotationsspindeltrieb, ist die Gewindespindel von der Antriebseinheit, die feststehend mit der Stelleinheit oder der Trageinheit verbunden ist, um die Spindelachse drehend antreibbar und greift in die Spindelmutter ein, die an der Trageinheit oder der Stelleinheit bezüglich Drehung um die Spindelachse feststehend angebracht ist. Axial, d.h. in Richtung der Spindelachse, stützt sich die Gewindespindel über den Koppelabschnitt an der Trageinheit oder der Stelleinheit ab, und die Spindelmutter entsprechend an der Stelleinheit oder der Trageinheit, so dass ein rotatorischer Antrieb der Gewindespindel eine translatorische Verstellung von Trageinheit und Stelleinheit relativ zueinander bewirkt.

In einer alternativen Ausführungsform, die als Tauchspindeltrieb bezeichnet wird, ist die Gewindespindel bezüglich Drehung um ihre Spindelachse mit ihrem Koppelabschnitt unverdrehbar mit der Trageinheit oder der Stelleinheit gekoppelt und die Spindelmutter ist drehbar, aber in Richtung der Spindelachse feststehend entsprechend an der Stelleinheit oder der Trageinheit gelagert. Wie in der ersten Ausführungsform stützt sich die Gewindespindel über den Koppelabschnitt in Richtung der Spindelachse axial an der Trageinheit oder der Stelleinheit ab, und die Spindelmutter entsprechend an der Stelleinheit oder der Trageinheit, so dass die Gewindespindel durch die Antriebseinheit in Richtung der Spindelachse translatorisch verschiebbar ist.

In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann. Ein gattungsgemäßer Verstellantrieb ist beispielsweise in der DE 10 2017 207 561 A1 beschrieben.

Zur Realisierung einer Längsverstellung der Stelleinheit in Richtung der Längsachse der Lenkspindel kann ein Verstellantrieb zwischen dem Mantelrohr der Stelleinheit und einer dieses axial längsverschieblich aufnehmenden Manteleinheit angeordnet sein, welche mit der Trageinheit verbunden ist, und wobei die Spindelachse im Wesentlichen parallel zur Längsachse ausgerichtet sein kann.

Zur Höhenverstellung kann ein Verstellantrieb zwischen der Trageinheit und einer daran höhenverstellbar gelagerten Stelleinheit angeordnet sein.

An einer Lenksäule können eine motorische Längs- und Höhenverstellung einzeln oder in Kombination ausgebildet sein.

Zur Verbesserung des Komforts beim Ein- und Aussteigen, oder um die Lenksäule beim autonomen Fahren beim Übergang in den autonomen Fahrbetrieb in eine Verstauposition außerhalb des manuellen Bedienbereichs zu verstellen, oder beim Wechsel in den manuellen Betrieb aus der Verstauposition wieder in die Bedienposition zurück zu bringen, ist eine relativ schnelle Verstellung über relativ große Verstellwege erforderlich. Dabei kann es zu Kollisionen des schnell bewegten Lenkrads mit Fahrzeuginsassen kommen, und es kann zu Verletzungen kommen. Eine Verringerung der Verstellgeschwindigkeit, um die Verletzungsgefahr zu verringern, ist jedoch wegen der damit verbundenen Komforteinbußen und auch wegen potentieller Sicherheitsrisiken beim autonomen Fahren nicht akzeptabel.

Ein Verstellantrieb der eingangs genannten Art ist aus der DE 10 2012 112197 A1 bekannt.

Angesichts der vorangehend erläuterten Problematik ist es eine Aufgabe der vorliegenden Erfindung, einen Verstellantrieb mit einem höheren Sicherheitsniveau anzugeben.

### Darstellung der Erfindung

Diese Aufgabe wird erfindungsgemäß gelöst durch einen Verstellantriebmit den Merkmalen des Anspruchs 1. Vorteilhafte Weiterbildungen ergeben sich aus den Unteransprüchen.

Bei einem Verstellantrieb für eine Lenksäule für ein Kraftfahrzeug, umfassend eine Gewindespindel, die mit einem Außengewinde in eine Spindelmutter eingreift, und eine Antriebseinheit, die mit der Gewindespindel oder der Spindelmutter derart gekoppelt ist, dass die Gewindespindel und die Spindelmutter relativ zueinander drehend antreibbar sind, wobei die Antriebseinheit eine drehmomentübertragende Rutschkupplung aufweist, die mit der Gewindespindel oder der Spindelmutter gekoppelt ist, ist erfindungsgemäß vorgesehen, dass die Rutschkupplung reibschlüssig einander kontaktierende Reibflächen und eine Vorspanneinrichtung aufweist, die ein elastisches Element aufweist.

Gemäß der Erfindung weist die Rutschkupplung zumindest zwei reibschlüssig einander kontaktierende Reibflächen auf. Diese zwei reibschlüssig einander kontaktierende Reibflächen bilden ein Reibpaar. Dadurch wird eine Reibkupplung ausgebildet, die an rotierenden Kupplungsteilen korrespondierende, kraftschlüssig gegeneinander anliegende, als Reibflächen ausgebildete Kupplungsflächen aufweist. Die Reibflächen können sich bezüglich der Rotations- oder Kupplungsachse der Rutschkupplung axial, radial oder schräg gegenüberliegen. Derartige Ausführungen können konstruktiv einfach und raumsparend realisiert werden.

Weiterhin ist erfindungsgemäß vorgesehen, dass die Rutschkupplung eine Vorspanneinrichtung aufweist. Mittels der Vorspanneinrichtung können die Reibflächen mit einer definierten Vorspannkraft, die Normalkraft, gegeneinander belastet werden. Durch die Höhe der Vorspannkraft kann das maximale Antriebsmoment vorgegeben werden, und entsprechend die maximal von dem Verstellantrieb ausgeübte Verstellkraft.

Die Vorspanneinrichtung weist erfindungsgemäß ein elastisches Element und ein verstellbares Einstellmittel auf. Als elastisches Element kann beispielsweise ein Federelement vorgesehen sein, welches die Reibflächen federnd gegeneinander andrückt. Die Höhe der Federkraft bestimmt die Vorspannung. Dabei ist vorteilhaft, dass Toleranzen durch die Federkraft ausgeglichen werden, wodurch ein sicherer Betrieb gewährleistet ist.

Das verstellbare Einstellmittel ist zusammen mit einem elastischen Element vorgesehen, und ermöglicht die Einstellung und variable Anpassung der Vorspannkraft. Als Einstellmittel kann beispielsweise eine Stellschraube vorgesehen sein, welche gegen eine Reibfläche verspannt werden kann, um die Vorspannkraft des Kraftschlusses in definierter Höhe zu erzeugen. Damit kann das Ansprechen der Rutschkupplung, also das Durchrutschen der Reibflächen zur Unterbrechung des Antriebsmoments, zur Vorgabe der maximal zulässigen Verstellkraft eingestellt werden.

Vorteilhaft ist die Kombination eines elastischen Elements mit einem Einstellmittel, beispielsweise einer Druckfeder oder Federscheibe, die zwischen einer Stellschraube und einem eine Reibfläche aufweisenden Kupplungsteil eingesetzt sein kann. Dadurch, dass die Stellschraube gegen das Federelement verspannt wird, kann die Vorspannkraft fein eingestellt und elastisch vergleichmäßigt in den Reibschluss eingeleitet werden. Dies kann beispielsweise während der Montage des Verstellantriebs erfolgen, indem die Stellschraube so lange verdreht wird, bis die zulässige Verstellkraft erreicht wird. Danach kann es zusätzlich vorgesehen sein, dass die Stellschraube fixiert wird, beispielsweise mittels einer Verstemmung.

Eine Rutschkupplung, die gleichbedeutend auch als Reibkupplung bezeichnet wird, weist kraft- bzw. reibschlüssig miteinander verbundene Reibflächen auf, die an rotierend antreibbaren Antriebselementen angeordnet sind, über die das von einem elektrischen Motor (Antriebsmotor) erzeugte Antriebsmoment an die Gewindespindel oder die Spindelmutter gekuppelt wird. Die Rutschkupplung bildet somit eine Rotationskupplung, die im Kraft- oder Momentfluss zwischen dem das Antriebsmoment erzeugenden Motor und der dadurch drehend angetriebenen Spindelmutter oder der Gewindespindel eingegliedert ist.

Dadurch, dass die Reibflächen der Rutschkupplung mit einer vorgegebenen Kupplungskraft gegeneinander belastet werden, wird eine definierte Reibungskraft (Haftkraft) erzeugt, durch die ein maximales Antriebsmoment oder Maximalmoment vorgegeben wird. Überschreitet das anliegende Antriebsmoment dieses maximale Antriebsmoment, rutschen die Reibflächen relativ zueinander durch, da die wirksame Haftreibung überschritten ist, und die Drehmomentübertragung wird unterbrochen. Dadurch wird die Verstellung gestoppt.

Im Normalbetrieb eines Verstellantriebs, wenn sich die verstellbaren Elemente der Lenksäule ungehindert relativ zueinander bewegen können, bleibt das in den Spindeltrieb, d.h. von dem Motor in die Spindelmutter oder die Gewindespindel des Spindeltriebs eingeleitete Antriebsmoment unterhalb des durch das maximale Antriebsmoment vorgegebenen Grenzwerts. Der Grenzwert bestimmt sich aus der wirksamen Normalkraft, die auf die Reibflächen wirkt, und dem Haftreibungskoeffizienten, sprich der Grenzfall stellt den Übergang von der Haftreibung in die Gleitreibung dar. Falls sich jedoch beim Verstellen ein Hindernis im Verstellweg befindet, beispielsweise wenn das Lenkrad gegen einen Fahrzeuginsassen anstößt, steigt das Antriebsmoment an. Wenn dabei das maximale Antriebsmoment der Rutschkupplung überschritten wird, rutscht diese durch und die Übertragung des Antriebsmoments wird unterbrochen, so dass die Verstellung stoppt. Durch entsprechende Vorgabe der maximalen Antriebskraft wird eine maximal zulässige Verstellkraft vorgegeben und dadurch die Stärke des Aufpralls bei einer Kollision mit Gegenständen oder Fahrzeuginsassen im Fahrzeuginnenraum begrenzt. Die Gefahr von Verletzungen und Beschädigungen wird reduziert, und das Sicherheitsniveau erhöht. Dabei ist vorteilhaft, dass weiterhin eine hohe Verstellgeschwindigkeit beibehalten werden kann, um einen hohen Fahr- und Bedienkomfort zu gewährleisten.

Bevorzugt ist die Rutschkupplung als Trockenkupplung ausgebildet. Dank dieser Ausführung kann die Verwendung von Flüssigkeiten vermieden werden. Insbesondere kann dadurch auf eine Abdichtung der Rutschkupplung zur Umgebung verzichtet werden.

Bevorzugt kann vorgesehen sein, dass ein Motor der Antriebseinheit mit der Rutschkupplung gekoppelt ist. Das Antriebsmoment wird vom Motor der Antriebseinheit, bevorzugt einem elektrischen Antriebsmotor, erzeugt, der eingangs- oder antriebsseitig mit der Rutschkupplung verbunden ist, vorzugsweise über ein Getriebe. Ausgangs- oder abtriebsseitig ist die Rutschkupplung zum Antrieb des Spindeltriebs an die Gewindespindel oder die Spindelmutter angeschlossen, d.h. damit gekoppelt. Somit ist die Rutschkupplung erfindungsgemäß im Antriebsstrang zur Übertragung des Antriebsmoments zwischen dem Motor und dem Spindeltrieb eingegliedert.

Bevorzugt weist die Rutschkupplung ein oder mehrere Reibpaare auf. Ganz besonders bevorzugt weist die Rutschkupplung zwei Reibpaare auf.

Es kann vorgesehen sein, dass zumindest eine der Reibflächen reibungserhöhend ausgestaltet ist. Zur Erzeugung einer definierten Reibung und eines damit korrespondierenden maximalen Antriebsmoments können eine oder beide Reibflächen einen Kupplungsbelag oder Reibbelag aufweisen, der ein Reibmaterial aufweisen kann, wie beispielsweise Sintermaterialien, Kohlenstoff-Faser-Compound- und/oder Keramikmaterialien, die in einem Bindemittel wie Kunstharz oder dergleichen gebunden sein können. Dadurch kann in vorteilhafter Weise eine optimierte Anpassung an die Materialien der Rutschkupplung, das Ansprechverhalten und die angestrebte Übertragungscharakteristik, den zur Verfügung stehenden Bauraum und dergleichen erfolgen.

Es ist möglich, dass die Reibflächen an drehmomentübertragenden Kupplungsteilen ausgebildet oder angeordnet sind und direkt gegeneinander anliegen. Zusätzlich kann zwischen Reibflächen ein oder mehrere Reibelemente angeordnet sein, beispielsweise schwimmend gelagerte, nur kraftschlüssig in den Drehmomentfluss eingekoppelte Reib- oder Kupplungsscheiben. Dabei ist es möglich, dass ein Reibelement reibungserhöhend ausgestaltet ist, beispielsweise mit einem Reibbelag wie vorangehend erläutert, oder ein Reibelement kann anstelle eines Reibbelags zwischen den Reibflächen eingesetzt sein, und beispielsweise als eine Art Reibscheibe aus einem vorangehend genannten Reibmaterial ausgebildet sein.

Mit einer oder mehreren zwischengeordneten Reibelementen kann eine paketartige Anordnung wie bei an sich bekannten Mehrscheibenkupplungen realisiert sein.

Eine vorteilhafte Ausführung kann vorsehen, dass die Rutschkupplung koaxial zur Gewindespindel angeordnet ist. Durch eine Anordnung koaxial zur Spindelachse der Gewindespindel kann eine besonders kompakte Bauweise realisiert werden. Es können bevorzugt ringförmige Reibflächen ausgebildet sein, welche die Gewindespindel ganz oder teilweise umschließen. Die Reibflächen können Axialflächen aufweisen, die bevorzugt mittels einer Vorspanneinrichtung in Richtung der Spindelachse gegeneinander belastet werden können, um eine definiertes maximale Antriebsmoment vorzugeben. Dabei kann zumindest eine der Reibflächen an der Gewindespindel oder der Spindelmutter angebracht oder ausgebildet sein. Dadurch ist das direkt am Spindeltrieb anliegende Antriebsmoment relevant für das Ansprechen der Rutschkupplung, so dass das maximale Antriebsmoment nicht durch Reibung an anderer Stelle oder dergleichen beeinträchtigt werden kann.

Eine vorteilhafte Ausführung der Erfindung kann vorsehen, dass die Rutschkupplung mit einem Getrieberad verbunden ist. Das Getrieberad ist ein Getriebeelement im Antriebsstrang zwischen dem Motor und der Gewindespindel oder der Spindelmutter, beispielsweise ein Zahnrad, Schneckenrad oder dergleichen. Durch die Verbindung mit einem Getrieberad kann die konstruktive Integration der Rutschkupplung in ein Getriebe der Antriebseinheit verbessert und vereinfacht werden.

Bei der zuletzt genannten Ausführung kann mit Vorteil vorgesehen sein, dass ein drehend antreibbares Antriebsrad der Antriebseinheit mit dem Getrieberad in Getriebeeingriff ist. Als Antriebsrad kann beispielsweise eine mit dem Motor verbundene Schnecke fungieren, die in ein als Schneckenrad ausgebildeten Getrieberad eingreift.

Es ist mit Vorteil möglich, dass das Getrieberad mit der Spindelmutter oder der Gewindespindel verbunden ist. Das Getrieberad kann beispielsweise ein Zahn- oder Schneckenrad umfassen, welches koaxial mit der Spindelmutter zur Realisierung eines Tauchspindelantriebs verbunden ist, bei dem die bezüglich Rotation um die Spindelachse feststehende Gewindespindel koaxial durch die Spindelmutter und das Getrieberad hindurchtaucht. Alternativ kann das Getrieberad mit der Gewindespindel verbunden sein, zur Bildung eines Rotationsspindelantriebs, bei dem die Gewindespindel von der Antriebseinheit relativ zur Lenksäule drehend antreibbar ist.

Eine vorteilhafte Weiterbildung der vorgenannten Ausführung ist, dass die Rutschkupplung zwischen einem Zahnkranz und einer Nabe des Getrieberads integriert ist. Dadurch kann die Rutschkupplung in vorteilhafter Weise besonders kompakt in das Getrieberad, beispielsweise ein Schneckenrad, integriert werden. Dabei kann die Nabe mindestens eine axiale oder radiale Reibfläche aufweisen, bevorzugt an ihrem Außenumfang. Der bezüglich der Nabe koaxial angeordnete Zahnkranz, der beispielsweise eine außen umlaufende Schneckenverzahnung aufweisen kann, weist mindestens eine korrespondierende Reibfläche auf.

Bei einem Tauchspindelantrieb kann die Nabe das Innengewinde der Spindelmutter aufweisen, welches einstückig mit der Nabe ausgebildet sein kann, oder in einer in die Nabe eingesetzte Gewindebuchse. Bei einem Rotationsspindelantrieb kann die Nabe drehfest mit der Gewindespindel verbunden sein, mittels einer festen Verbindung oder durch einstückige Ausbildung.

Es kann vorteilhaft sein, dass die Nabe und der Zahnkranz einander gegenüberliegende Reibflächen aufweisen, bevorzugt axial gegeneinander gerichtet. Der drehmomentübertragende Reibschluss kann dadurch kompakt in das Getrieberad integriert werden. Ein Vorteil von axial bezüglich der Spindelachse angeordneten Reibflächen ist, dass eine Vorspanneinrichtung, die beispielsweise eine Stellschraube und zusätzlich oder alternativ ein Federelement umfassen kann, axial bezüglich der Reibflächen angeordnet werden kann, wodurch eine Realisierung auch bei einem relativ kleinen Durchmesser des Getrieberads problemlos möglich ist. Es kann eine Anordnung ähnlich wie bei einer bekannten Bauweise einer Scheibenkupplung mit kreisringförmigen Reibflächen gebildet werden.

Die Integration der Rutschkupplung in das Getrieberad ist in mehrfacher Hinsicht vorteilhaft. So kann eine besonders kompakte Bauform realisiert werden, und es wird eine direkte Ankopplung an die Gewindespindel oder die Spindelmutter ermöglicht, wodurch das Ansprechverhalten des Verstellantriebs verbessert wird. Es ist weiterhin vorteilhaft, dass die Nabe und der Zahnkranz aus unterschiedlichen Materialien ausgebildet sein können, beispielsweise aus Stahl, Nichteisen-Metallen, oder auch Kunststoffen, Verbundmaterialien oder dergleichen.

Weiterhin betrifft die Erfindungeine Lenksäule für ein Kraftfahrzeug, mit einer Trageinheit, die an einer Fahrzeugkarosserie anbringbar ist, und von der eine Stelleinheit gehalten ist, in der eine Lenkspindel drehbar gelagert ist, und mit einem Verstellantrieb, der eine Gewindespindel, die mit einem Außengewinde in eine Spindelmutter eingreift, und eine Antriebseinheit umfasst, der mit der Gewindespindel oder der Spindelmutter derart gekoppelt ist, dass die Gewindespindel und die Spindelmutter relativ drehend zueinander antreibbar sind, wobei der Verstellantrieb mit der Trageinheit oder der Stelleinheit verbunden ist, wobei der Verstellantrieb als ein erfindungsgemäßer Verstellantrieb ausgebildet ist. Dieser kann auch die zuvor genannten vorteilhaften Weiterbildungen einzeln oder in Kombinationen aufweisen, wie sie durch die Ansprüche definiert sind.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: einen erfindungsgemäßen Verstellantrieb einer Lenksäule gemäß Figuren 1 und 2 in einer freigestellten schematischen Ansicht,
- Figur 4: das Getrieberad des Verstellantriebs in einer Explosionsdarstellung,
- Figur 5: einen Längsschnitt entlang der Spindelachse durch den Verstellantrieb gemäß Figur 3,
- Figur 6: eine vergrößerte Detaildarstellung aus Figur 5.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

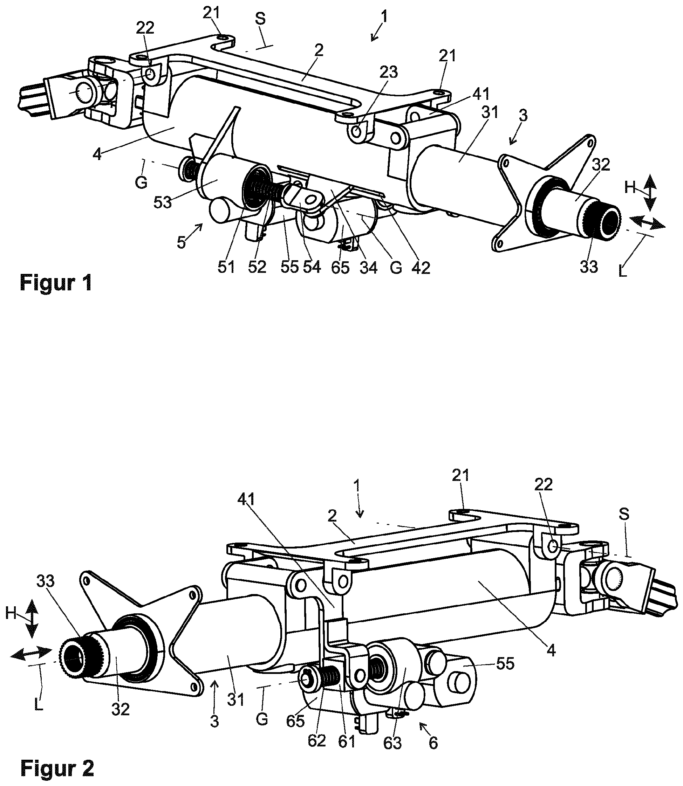

Figur 1 zeigt eine erfindungsgemäße Lenksäule 1 in einer schematischen perspektivischen Ansicht von oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines dargestellten Stellantriebs 6 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 mit einem sich längs einer Achse G erstreckenden Innengewinde 74 auf, in die eine Gewindespindel 52 eingreift, also mit ihrem Außengewinde in das korrespondierende Innengewinde 74 der Spindelmutter 51 eingeschraubt ist. Die Gewindespindelachse der Gewindespindel 52 ist identisch mit der Achse G und verläuft im Wesentlichen parallel zur Längsachse L.

Die Spindelmutter 51 ist um die Achse G drehbar in einem Lagergehäuse 53 gelagert, welches fest mit der Manteleinheit 4 verbunden ist. In Richtung der Achse G ist die Spindelmutter 51 axial über das Lagergehäuse 53 an der Manteleinheit 4 abgestützt. Der Verstellantrieb 5 ist entsprechend ein sogenannter Tauchspindelantrieb.

Die Gewindespindel 52 ist mit einem an ihrem hinteren Ende ausgebildeten Befestigungselement 54 über ein Übertragungselement 34 mit der Stelleinheit 3 verbunden, und zwar fest in Richtung der Achse G bzw. der Längsachse L und feststehend bezüglich Drehung um die Achse G. Durch die drehend antreibbare Spindelmutter 51 und die bezüglich Drehung feststehende Gewindespindel 52 wird ein sogenannter Tauchspindelantrieb realisiert.

Das Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Antriebsmotor 55 auf, von dem die Spindelmutter 51 bezüglich der Achse G relativ zur feststehenden Gewindespindel 52 drehend antreibbar ist. Dadurch kann - je nach Drehrichtung des Antriebsmotors 55 - die Gewindespindel 52 in Richtung der Achse G translatorisch relativ zur Spindelmutter 51 verlagert werden, so dass entsprechend die mit der Gewindespindel 52 verbundene Stelleinheit 3 relativ zu der mit der Spindelmutter 51 verbundenen Manteleinheit 4 in Richtung der Längsachse L verstellt wird. Der Antrieb der Spindelmutter 51 sowie die Abstützung der Spindelmutter 51 in Richtung der Achse G an der Manteleinheit 4 wird weiter unten noch detailliert erläutert.

In Figur 2, welche eine perspektivische Ansicht der Lenksäule 1 von der in Figur 1 hinten liegenden Seite zeigt, ist erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in deren Innengewinde 74 längs einer Achse G eine Gewindespindel 52 eingreift. Die Gewindespindel 52 ist in einem Lagergehäuse 63, welches an der Manteleinheit 4 befestigt ist, drehbar um die Achse G gelagert und axial, in Richtung der Achse G, an der Manteleinheit 4 abgestützt, und von einem elektrischen Antriebsmotor 65 wahlweise in beide Rotationsrichtungen um die Achse G drehend antreibbar. Entsprechend handelt es sich bei dem Verstellantrieb 6 um einen sogenannten Rotationsspindelantrieb.

Die Spindelmutter 61, die aus Kunststoff oder aus einem Buntmetall wie Messing oder dergleichen gebildet sein kann, ist bezüglich einer Drehung um die Achse G feststehend an einem Ende des zweiarmigen Stellhebels 41 angebracht, der um ein Schwenklager 23 drehbar an der Trageinheit 2 gelagert ist, und dessen anderer Arm mit dem anderen Ende mit der Manteleinheit 4 verbunden ist.

Durch Drehung der Gewindespindel 61 kann - je nach Drehrichtung des Antriebsmotors 65 - die Spindelmutter 61 in Richtung der Achse G translatorisch relativ zur Gewindespindel 52 verlagert werden, so dass entsprechend die über den Stellhebel 41 mit der Spindelmutter 61 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet.

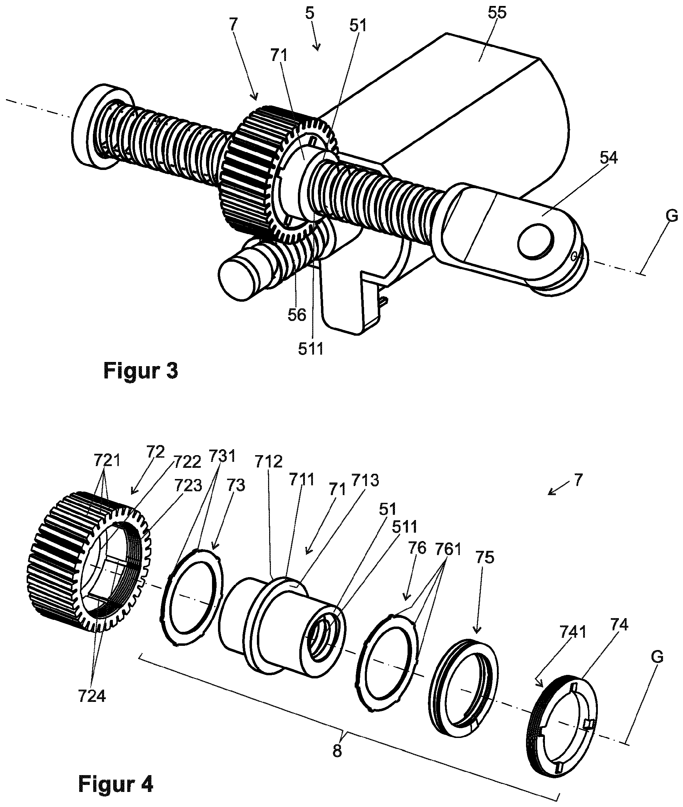

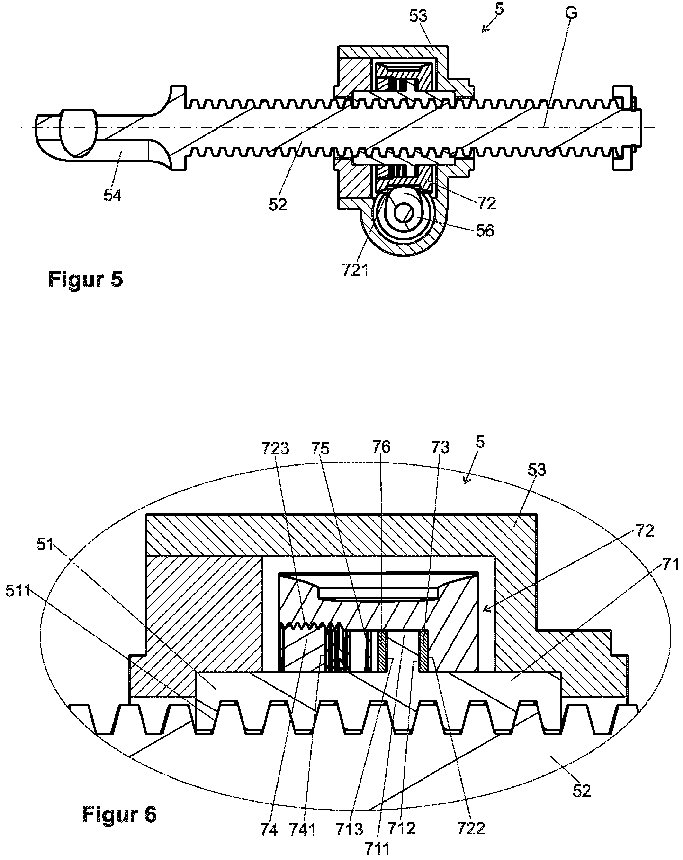

Figur 3 zeigt den als Tauchspindelantrieb ausgebildeten Verstellantrieb 5 in einer separaten, freigestellten Darstellung, wobei das Lagergehäuse 53 zur besseren Übersicht weggelassen ist. In Figur 5 ist ein Längsschnitt entlang der Spindelachse G gezeigt, und in Figur 6 eine vergrößerte Detailansicht daraus.

Der Verstellantrieb 5 weist ein Getrieberad 7 auf, welches ein Nabenelement 71 (=Nabe) umfasst, welches die Spindelmutter 51 mit dem Innengewinde 511 aufweist und dabei koaxial zur Spindelachse G angeordnet ist. Die Spindelmutter 51 und das Nabenelement 71 können bevorzugt wie dargestellt einstückig ausgebildet sein. Es ist jedoch auch denkbar und möglich, dass die Spindelmutter 51 aus einem metallischen Werkstoff gebildet ist und das Nabenelement 71, welches aus einem Kunststoff gebildet sein kann, darauf im Kunststoff-Spritzguss aufgespritzt ist.

Koaxial zum Nabenelement 71 ist ein Zahnkranz 72 mit einer außen umlaufenden Verzahnung 721 angeordnet und über eine nachfolgend näher erläuterte erfindungsgemäße Rutschkupplung 8 verbunden.

Eine mit der Motorwelle des Motors 55 verbundene Schnecke 56 steht in Verzahnungseingriff mit der Verzahnung 721 des Zahnkranzes 72.

Die erfindungsgemäße, in das Getrieberad 7 integrierte Rutschkupplung 8 ist im zusammengebauten Zustand in Figuren 5 und 6 gezeigt, und in einer in Richtung der Spindelachse G auseinandergezogenen Explosionsdarstellung in Figur 4.

Das Nabenelement 71 weist einen radial umlaufenden Vorsprung 711 auf, der auf seinen Axialseiten ringförmig umlaufende axiale Reibflächen 712 und 713 aufweist. Die Reibflächen 712 und 713 werden somit durch die Schultern des umlaufen Vorsprungs 711 gebildet. In eingebauten Zustand liegt die Reibfläche 712 einer korrespondierenden, ebenfalls ringförmigen axialen Reibfläche 722 innen an dem Zahnkranz 72 axial gegenüber. Der Zahnkranz 72 weist dazu einen nach innen vorspringen Abschnitt auf, der eine Schulter aufweist, die die Reibfläche 722 umfasst.

Axial zwischen den Reibflächen 712 und 722 ist ein ringscheibenförmiges Reibelement 73 reibschlüssig angeordnet.

Auf der der Reibfläche 722 abgewandten Seite ist eine ringförmige Stellschraube 74 in ein koaxiales Innengewinde 723 des Zahnkranzes 72 eingeschraubt. Die Stellschraube 74 weist eine der Reibfläche 713 axial gegenüberliegende axiale Reibfläche 741 auf.

Axial zwischen der Reibfläche 741 der Stellschraube 74 und der Reibfläche 713 des Nabenelements 71 ist ein ringförmiges, axial elastisches Federelement 75, beispielsweise eine Schrauben-, Well- oder Tellerfeder, oder ein aus einem Elastomer gebildeter O-Ring, und ein Reibelement 76 angeordnet, welches ähnlich und im Wesentlichen gleichwirkend ausgebildet sein kann wie das oben genannte Reibelement 73.

Die Reibelemente 73 und 76 weisen jeweils nach außen vorspringende Zapfen 731 und 761 auf, die bevorzugt gleichmäßig über den Umfang der Reibelemente 73 und 76 verteilt angeordnet sind. Der Zahnkranz 72 weist bevorzugt innenliegende Nuten 724 auf, in die die Zapfen 731 und 761 der Reibelemente 73 und 76 eingreifen und diese gegenüber dem Zahnkranz in Rotationsrichtung um die Spindelachse G festlegt. Somit können die Reibelemente 73 und 76 nicht gegenüber dem Zahnkranz 72 um die Spindelachse G verdreht werden.

Durch die Stellschraube 74 wird das Reibelement 76 über das Federelement 75 mit einer definierten Vorspannkraft gegen die Reibfläche 713 des Nabenelements 71 belastet. Dadurch wird gleichzeitig das Nabenelement 71 mit der Reibfläche 712 axial über das Reibelement 73 mit der Vorspannkraft axial gegen die korrespondierende Reibfläche 722 des Zahnkranzes 72 angepresst. Dadurch ist das Nabenelement 71 über die Reibflächen 712 und 713 mit den korrespondierenden Reibflächen 722 und 741 am Zahnkranz 72 reibschlüssig, d.h. kraftschlüssig gekuppelt. Durch das beschriebene Zusammenwirken wird die erfindungsgemäße Rutschkupplung 8 gebildet, über die das von dem Motor 55 abgegebene Antriebsmoment auf das Getrieberad 7 und die Gewindespindel 52 übertragen wird. Das maximale Antriebsmoment kann durch Ein- oder Ausschrauben der Verstellmutter 74 eingestellt werden, wodurch die zwischen den Reibflächen 712, 713, 722 und 741 wirkende axiale Vorspannkraft einstellbar ist.

### Bezugszeichenliste

- 1: Lenksäule
- 2: Trageinheit
- 21: Befestigungsmittel
- 22, 23: Schwenklager
- 3: Stelleinheit
- 31: Mantelrohr
- 32: Lenkspindel
- 33: Befestigungsabschnitt
- 34: Übertragungselement
- 4: Manteleinheit
- 41: Stellhebel
- 42: Durchgangsöffnung
- 5, 6: Verstellantrieb
- 51, 61: Spindelmutter
- 511: Innengewinde
- 52, 62: Gewindespindel
- 53, 63: Lagergehäuse
- 54: Befestigungselement
- 55, 65: Motor (Antriebsmotor)
- 56, 66: Schnecke
- 7: Getrieberad
- 71: Nabenelement
- 711: Vorsprung
- 712: Reibfläche
- 713: Reibfläche
- 72: Zahnkranz
- 721: Verzahnung
- 722: Reibfläche
- 73, 76: Reibelement
- 74: Stellschraube
- 741: Reibfläche
- 75: Federelement
- 8: Rutschkupplung

- L: Längsachse
- H: Höhenrichtung
- G: Spindelachse (Gewindespindelachse)

## Patentansprüche

1. Verstellantrieb (5) für eine Lenksäule (1) für ein Kraftfahrzeug, umfassend eine Gewindespindel (52), die mit einem Außengewinde in eine Spindelmutter (51, 61) eingreift, und eine Antriebseinheit (55), die mit der Gewindespindel (52) oder der Spindelmutter (51) derart gekoppelt ist, dass die Gewindespindel (52) und die Spindelmutter (51) relativ zueinander drehend antreibbar sind,
wobei die Antriebseinheit (55) eine drehmomentübertragende Rutschkupplung (8) aufweist, die mit der Gewindespindel (52) oder der Spindelmutter (51) gekoppelt ist, **dadurch gekennzeichnet,**
**dass** die Rutschkupplung (8) reibschlüssig einander kontaktierende Reibflächen (712, 713, 722, 741) und eine Vorspanneinrichtung (74, 75) aufweist, die ein elastisches Element (75) und ein verstellbares Einstellmittel (74) aufweist.

2. Verstellantrieb nach Anspruch 1, **dadurch gekennzeichnet, dass** ein Motor (55) der Antriebseinheit mit der Rutschkupplung (8) gekoppelt ist.

3. Verstellantrieb nach einem der vorangehenden Ansprüche, **dadurch gekennzeichnet, dass** zumindest eine der Reibflächen (712, 713, 722, 741) reibungserhöhend ausgestaltet ist.

4. Verstellantrieb nach einem der vorangehenden Ansprüche, **dadurch gekennzeichnet, dass** die Rutschkupplung (8) koaxial zur Gewindespindel (52) angeordnet ist.

5. Verstellantrieb nach einem der vorangehenden Ansprüche, **dadurch gekennzeichnet, dass** die Rutschkupplung (8) mit einem Getrieberad (7) verbunden ist.

6. Verstellantrieb nach Anspruch 5, **dadurch gekennzeichnet, dass** ein drehend antreibbares Antriebsrad (56) der Antriebseinheit (55) mit dem Getrieberad (7) in Getriebeeingriff ist.

7. Verstellantrieb nach einem der vorangehenden Ansprüche 5 oder 6, **dadurch gekennzeichnet, dass** das Getrieberad (7) mit der Spindelmutter (51) oder der Gewindespindel (52) verbunden ist.

8. Verstellantrieb nach einem der vorangehenden Ansprüche 5 bis 7, **dadurch gekennzeichnet, dass** die Rutschkupplung (8) zwischen einem Zahnkranz (72) und einer Nabe (71) des Getrieberads (7) angeordnet ist.

9. Verstellantrieb nach Anspruch 8, **dadurch gekennzeichnet, dass** die Nabe (71) mit der Spindelmutter (51) oder der Gewindespindel (52) verbunden ist.

10. Verstellantrieb nach einem der Ansprüche 8 oder 9, **dadurch gekennzeichnet, dass** die Nabe (71) und der Zahnkranz (72) einander gegenüberliegende Reibflächen (712, 713, 722, 741) aufweisen.

11. Verstellantrieb nach einem der vorangehenden Ansprüche 5 bis 10, **dadurch gekennzeichnet, dass** das Getrieberad (7) eine Vorspanneinrichtung aufweist.

12. Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (37) drehbar gelagert ist, und mit einem Verstellantrieb (5, 6), der eine Gewindespindel (52, 62), die mit einem Außengewinde in eine Spindelmutter (51, 61) eingreift, und eine Antriebseinheit (55, 65) umfasst, der mit der Gewindespindel (52, 62) oder der Spindelmutter (51, 61) derart gekoppelt ist, dass die Gewindespindel (52, 62) und die Spindelmutter (51, 61) relativ drehend zueinander antreibbar sind, wobei der Verstellantrieb (5, 6) mit der Trageinheit (2) oder der Stelleinheit (3) verbunden ist,
**dadurch gekennzeichnet,**
**dass** der Verstellantrieb (5, 6) ausgebildet ist gemäß einem der Ansprüche 1 bis 11.

## Claims

1. An adjustment drive (5) for a steering column (1) for a motor vehicle, comprising a threaded spindle (52) which engages with an outer thread in a spindle nut (51, 61) and a drive unit (55) which is coupled to the threaded spindle (52) or the spindle nut (51) in such a manner that the threaded spindle (52) and the spindle nut (51) can be driven in rotation relative to each other,
wherein the drive unit (55) has a torque-transmitting slip clutch (8) which is coupled to the threaded spindle (52) or the spindle nut (51),
**characterized in that**
the slip clutch (8) has friction faces (712, 713, 722, 741) which contact each other in a frictionally engaging manner and a pretensioning device (74, 75) which has a resilient element (75) and an adjustable adjustment means (74).

2. The adjustment drive as claimed in claim 1, **characterized in that** a motor (55) of the drive unit is coupled to the slip clutch (8).

3. The adjustment drive as claimed in in one of the preceding claims, **characterized in that** at least one of the friction faces (712, 713, 722, 741) is configured in a friction-increasing manner.

4. The adjustment drive as claimed in one of the preceding claims, **characterized in that** the slip clutch (8) is arranged coaxially with respect to the threaded spindle (52).

5. The adjustment drive as claimed in one of the preceding claims, **characterized in that** the slip clutch (8) is connected to a gear wheel (7).

6. The adjustment drive as claimed in claim 5, **characterized in that** a rotationally drivable drive wheel (56) of the drive unit (55) is in meshing engagement with the gear wheel (7).

7. The adjustment drive as claimed in either of the preceding claims 5 or 6, **characterized in that** the gear wheel (7) is connected to the spindle nut (51) or the threaded spindle (52).

8. The adjustment drive as claimed in one of the preceding claims 5 to 7, **characterized in that** the slip clutch (8) is arranged between a sprocket (72) and a hub (71) of the gear wheel (7).

9. The adjustment drive as claimed in claim 8, **characterized in that** the hub (71) is connected to the spindle nut (7) or the threaded spindle (52).

10. The adjustment drive as claimed in one of the claims 8 or 9, **characterized in that** the hub (71) and the sprocket (72) have mutually opposing friction faces (712, 713, 722, 741).

11. The adjustment drive as claimed in one of the preceding claims 5 to 10, **characterized in that** the gear wheel (7) has a pretensioning device.

12. A steering column (1) for a motor vehicle, having a carrier unit (2) which can be fitted to a vehicle body, and by means of which an adjustment unit (3), in which a steering spindle (37) is rotatably supported is retained, and having an adjustment drive (5, 6) which comprises a threaded spindle (52, 62) which engages with an outer thread in a spindle nut (51, 61) and a drive unit (55, 65) which is coupled to the threaded spindle (52, 62) or the spindle nut (51, 62) in such a manner that the threaded spindle (52, 62) and the spindle nut (51, 61) can be driven so as to rotate relative to each other, wherein the adjustment drive (5, 6) is connected to the carrier unit (2) or the adjustment unit (3),
**characterized in that**
the adjustment drive (5, 6) is constructed as claimed in one of claims 1 to 11.

## Revendications

1. Entraînement de réglage (5) pour une colonne de direction (1) d'un véhicule automobile, comprenant une broche filetée (52) qui s'engage dans un filetage extérieur d'un écrou de broche (51, 61) et une unité d'entraînement (55) qui est couplée à la broche filetée (52) ou à l'écrou de broche (51) de manière à ce que la broche filetée (52) et l'écrou de broche (51) puissent être entraînés en rotation l'un par rapport à l'autre, l'unité d'entraînement (55) comporte un accouplement à friction (8) transmettant le couple, qui est couplé à la broche filetée (52) ou à l'écrou de la broche (51),
**caractérisé par le fait que**
l'embrayage à friction (8) a des faces de friction (712, 713, 722, 741) qui se touchent par friction et un dispositif de précontrainte (74, 75) qui a un élément élastique (75) et un moyen de réglage ajustable (74).

2. L'entraînement de réglage selon la revendication 1, **caractérisé par le fait qu'**un moteur (55) de l'unité d'entraînement est couplé à l'embrayage à glissement (8).

3. L'entraînement de réglage selon l'une des revendications précédentes, **caractérisée par le fait qu'**au moins une des faces de frottement (712, 713, 722, 741) est configurée de manière à augmenter le frottement.

4. L'entraînement de réglage selon l'une des revendications précédentes, **caractérisée en ce que** le limiteur de couple (8) est disposé coaxialement par rapport à la tige filetée (52).

5. L'entraînement de réglage selon l'une des revendications précédentes, **caractérisée en ce que** le limiteur de couple (8) est relié à une roue dentée (7).

6. L'entraînement de réglage selon la revendication 5, **caractérisée par le fait qu'**une roue d'entraînement rotative (56) de l'unité d'entraînement (55) est en prise avec la roue d'engrenage (7).

7. L'entraînement de réglage selon l'une des revendications précédentes 5 ou 6, **caractérisée par le fait que** la roue dentée (7) est reliée à l'écrou de la broche (51) ou à la broche filetée (52).

8. L'entraînement de réglage selon l'une des revendications précédentes 5 à 7, **caractérisée par le fait que** le limiteur de couple (8) est disposé entre un pignon (72) et un moyeu (71) de la roue dentée (7).

9. L'entraînement de réglage selon la revendication 8, **caractérisée en ce que** le moyeu (71) est relié à l'écrou de la broche (7) ou à la broche filetée (52).

10. L'entraînement de réglage selon l'une des revendications 8 ou 9, **caractérisée par le fait que** le moyeu (71) et le pignon (72) ont des faces de frottement (712, 713, 722, 741) qui s'opposent l'une à l'autre.

11. L'entraînement de réglage selon l'une des revendications précédentes 5 à 10, **caractérisé par le fait que** la roue dentée (7) comporte un dispositif de précontrainte.

12. Colonne de direction (1) pour un véhicule automobile, comportant une unité de support (2) qui peut être montée sur la carrosserie d'un véhicule, et au moyen de laquelle une unité de réglage (3), dans laquelle une tige de direction (37) est supportée de manière rotative, est retenue, et comportant un entraînement de réglage (5, 6) qui comprend une tige filetée (52, 62) qui s'engage dans un filetage extérieur d'un écrou de tige (51, 61) et une unité d'entraînement (55, 65) qui est couplée à la broche filetée (52, 62) ou à l'écrou de broche (51, 62) de manière à ce que la broche filetée (52, 62) et l'écrou de broche (51, 61) puissent être entraînés de façon à tourner l'un par rapport à l'autre, l'entraînement de réglage (5, 6) étant relié à l'unité porteuse (2) ou à l'unité de réglage (3),
**caractérisé par le fait que**
l'entraînement de réglage (5, 6) est construit selon l'une des revendications 1 à 11.
